# EUROPÄISCHE PATENTSCHRIFT

(11) **EP 3 578 340 B1**
(45) Veröffentlichungstag und Bekanntmachung des Hinweises auf die Patenterteilung: **17.02.2021**
(21) Anmeldenummer: 19178826.4
(22) Anmeldetag: 06.06.2019
(51) Int. Cl.: B29C 64/118, B29C 64/106, B29C 64/209, B29C 64/336, B29C 70/00, B29C 70/38, B33Y 30/00

(54) **ANLAGE UND DRUCKKOPF ZUM HERSTELLEN VON DREIDIMENSIONALEN STRUKTUREN**
SYSTEM AND PRINTING HEAD FOR PRODUCING THREE-DIMENSIONAL STRUCTURES
INSTALLATION ET TÊTE D'IMPRESSION DESTINÉES À LA FABRICATION DE STRUCTURES TRIDIMENSIONNELLES

(30) Priorität: 08.06.2018 DE 102018113779
(43) Veröffentlichungstag der Anmeldung: 11.12.2019
(73) Patentinhaber: Deutsches Zentrum für Luft- und Raumfahrt e.V., 51147 Köln (DE)
(72) Erfinder: KLETZ, Dr. Björn Timo, 38106 Braunschweig (DE); TITZE, Maik, 30419 Hannover (DE)
(74) Vertreter: Gramm, Lins & Partner Patent- und Rechtsanwälte PartGmbB

(56) Entgegenhaltungen:
- WO-A1-2016/041449
- CN-A- 104 441 658
- RU-U1- 169 634

## Beschreibung

Die Erfindung betrifft eine Anlage zum Herstellen von dreidimensionalen Strukturen, die zwei oder mehr unterschiedliche Werkstoffe aufweisen. Die Erfindung betrifft ebenso einen 3D-Druckkopf hierzu.

Mithilfe von generativen Verfahren lassen sich unter Verwendung eines entsprechenden Werkstoffes Bauteile mit einer fast beliebigen Form herstellen. Der 3D-Druck mithilfe eines 3D-Druckers stellt dabei einen sehr bekannten Vertreter der generativen Fertigungsverfahren dar. Dabei wird mithilfe eines 3D-Druckers schichtweise ein schmelzbarer Werkstoff, beispielsweise ein thermoplastischer Kunststoff, ausgegeben und gedruckt, wodurch sich am Ende des Verfahrens ein dreidimensionales Bauteil bzw. eine dreidimensionale Struktur ergibt.

Die Steifigkeit und Festigkeit eines auf dieser Basis hergestellten Bauteils hängt dabei signifikant von den entsprechenden Materialeigenschaften des verwendeten schmelzbaren Werkstoffes ab. Vor allem mit Blick auf den Leichtbau ist es dabei oftmals wünschenswert, dass die Bauteile Verstärkungsfasern aufweisen, um eine hohe gewichtsspezifische Festigkeit und Steifigkeit zu erlangen. Damit rückt der 3D-Druck von Faserverbundwerkstoffen, die mindestens ein Fasermaterial und ein Matrixmaterial aufweisen, in den Fokus. Allerdings weisen Faserverbundwerkstoffe anisotrope Werkstoffeigenschaften auf, so dass Festigkeit und Steifigkeit richtungsabhängig ist und somit abhängig ist von dem Faserverlauf. Daher werden oftmals mehrere Lagen Fasermaterial mit unterschiedlichen Faserorientierungen angeordnet, um so zumindest teilweise die homogenen Werkstoffeigenschaften von Metall nachzubilden.

Eine solche, insbesondere bedarfsweise Integration von Fasermaterial in einen 3D-Druck hätte dabei den entscheidenden Vorteil, dass Bauteile und Strukturen hergestellt werden können, deren Lastpfade exakt an die Bedingungen angepasst sind, ohne dabei unnötigerweise Fasermaterial zu benötigen.

Aus Hauke Prüß, Thomas Vietor: "Neue Gestaltungsfreiheiten durch 3D-gedruckte Faser-Kunststoff-Verbunde", Forum für Rapid Technologie, Ausgabe 12/2015, ist ein 3D-Druckkopf bekannt, dem ein quasiendloses Fasermaterial zentral zugeführt wird. Des Weiteren wird dem 3D-Druckkopf mithilfe zweier Zuführkanäle ein Kunststoffmaterial zugeführt, wobei Fasermaterial und Kunststoffmaterial in einer gemeinsamen Mischkammer münden, wodurch das hindurchgeführte Fasermaterial von dem Kunststoffmaterial benetzt und diese so gebildete Materialmischung ausgegeben wird. Hierdurch lassen sich nahezu beliebige Strukturen mit integrierten Lastpfaden entwickeln.

Ergänzend hierzu ist aus der nachveröffentlichten DE 10 2017 124 352.6 eine Anlage zum Herstellen von dreidimensionalen Strukturen mit einem 3D-Druckkopf bekannt, bei dem drei oder mehr Zuführkanäle vorgesehen sind, die um einen axialen Verlauf des Zuführkanals für das Fasermaterial herum angeordnet sind, wodurch sich insbesondere der Faser-Kunststoff-Druck verschiedener Kunststoffmaterialien realisieren lässt.

Der Nachteil dieser bekannten 3D-Druckköpfe liegt in der Tatsache, dass durch die Zuführung des thermoplastischen Matrixmaterials in die Mischkammer ein Druck innerhalb der Mischkammer erzeugt wird, der auch dazu führt, dass der aufgeschmolzene thermoplastische Kunststoff in den Zuführkanal des Fasermaterials aufsteigt und somit entgegen der Förderrichtung des quasiendlosen Fasermaterials gedrückt wird. Dies kann im schlechtesten Fall dazu führen, dass der thermoplastische Kunststoff an der Eintrittsstelle, an der das Fasermaterial in den 3D-Druckkopf in den dafür vorgesehenen Zuführkanal eingeführt wird, austritt und somit an dem 3D-Druckkopf eine ungewollte Leckage entsteht. Es besteht aber auch die Gefahr, dass durch das Aufsteigen des aufgeschmolzenen thermoplastischen Kunststoffes innerhalb des Zuführkanals der Kunststoff abkühlt und dann innerhalb des Zuführkanals für das Fasermaterial sich wieder verfestigt bzw. erstarrt, was schließlich zu einer Förderunterbrechung des Fasermaterials führt und somit zum Abbruch des Druckprozesses. Dies kann im schlimmsten Fall zum Ausschuss des herzustellenden Bauteils führen.

In der nachveröffentlichten DE 10 2017 124 353.4 wird zur Lösung dieses Problems vorgeschlagen, dass das Fasermaterial samt seinem Fasermagazin in einem geschlossenen Druckbehälter untergebracht ist, wobei dieser Druckbehälter über ein Rohrleitungssystem mit dem Druckkopf luftdicht verbunden ist. In diesem geschlossenen Drucksystem wird nun ein Überdruck erzeugt, der über Druckschläuche bis in den 3D-Druckkopf wirkt und dort ein Aufsteigen des thermoplastischen Kunststoffes entgegen der Faserförderrichtung verhindern soll. Nachteilig hierbei ist jedoch, dass die Anlage hierdurch sehr groß und komplex wird und aufgrund des Rohrleitungssystems möglicherweise nur einen eingeschränkten Bewegungsspielraum hat. Außerdem wird durch die Verwendung von Druckluft die Gefahr begünstigt, dass sich in dem Matrixmaterial Lufteinschlüsse bilden, die dann zu Fehlstellen innerhalb des Bauteils führen.

Die RU 169 634 U1 offenbart eine Extrusionsvorrichtung zur additiven Herstellung von Verbundwerkstoffprodukten. Die Extrusionsvorrichtung weist einen ersten Zufuhrkanal für verstärktes Fasermaterial und einen zweiten Zufuhrkanal für einen Kunststoff auf. Die Zufuhrkanäle münden in eine Arbeitskammer, von der aus die beiden Ausgangsstoffe durch eine Düse austreten. Der von den beiden Zufuhrkanälen eingeschlossene Winkel beträgt 15°.

Die CN 104441658 A betrifft einen 3D-Druckkopf für faserverstärkte Verbundmaterialien. Der Druckkopf weist zwei Zufuhrkanäle auf. Ein für das Fasermaterial vorgesehener Zufuhrkanal ist als Nadelröhre ausgebildet, der andere Zufuhrkanal ist für den geschmolzenen Kunststoff vorgesehen. Die Zufuhrkanäle schließen einen Winkel kleiner 90° ein.

Die WO 2016/041449 A1 beschreibt ein 3D-Drucksystem nach dem Fused Deposition Prinzip, bei dem das Ausgangsmaterial aufgeschmolzen und auf ein Substrat aufgetragen wird. Das 3D-Drucksystem beinhaltet eine Bewegungsschraube zur Förderung der Schmelze in Richtung eines Auslasses. In die Bewegungsschraube ist ein Faserkanal eingesetzt, durch den ein Fasermaterial zuführbar ist, sodass das Fasermaterial gemeinsam mit der Schmelze auftragbar ist.

Es ist Aufgabe der vorliegenden Erfindung eine verbesserte Anlage zum Herstellen von dreidimensionalen Strukturen mithilfe eines 3D-Druckkopfes anzugeben, ohne dass hierbei die Gefahr besteht, dass das Matrixmaterial aus dem 3D-Druckkopf heraustritt bzw. dass das Matrixmaterial innerhalb des Druckkopfes an Stellen erstarrt, wo es normalerweise nicht sein sollte. Dabei ist es insbesondere Aufgabe der vorliegenden Erfindung eine Anlage zum Herstellen von dreidimensionalen Strukturen mithilfe eines 3D-Druckkopfes anzugeben, die einen hohen Bewegungsspielraum hat und nicht durch ein starres und unflexibles Rohrleitungssystem eingeschränkt ist. Die Aufgabe wird mit der Anlage gemäß Anspruch 1 sowie dem 3D-Druckkopf gemäß Anspruch 16 erfindungsgemäß gelöst.

Gemäß Anspruch 1 wird eine Anlage zum Herstellen von dreidimensionalen Strukturen vorgeschlagen, die zwei oder mehr unterschiedliche Werkstoffe aufweisen. Die Anlage weist dabei einen 3D-Druckkopf auf, der eine erste Materialzuführung zum Zuführen eines quasiendlosen Fasermaterials zu dem 3D-Druckkopf und wenigstens eine zweite Materialzuführung zum Zuführen eines Matrixmaterials, beispielsweise eines thermoplastischen Kunststoffes, zu dem 3D-Druckkopf hat. Es ist denkbar, dass auch weitere Materialzuführungen vorgesehen sind, um noch weitere Werkstoffe dem gesamten Materialgemisch zuzuführen.

Die erste Materialzuführung und die zweite Materialzuführung münden dabei in einer gemeinsamen Mischkammer des 3D-Druckkopfes, in der das zugeführte Fasermaterial der ersten Materialzuführung mit dem zugeführten Matrixmaterial der zweiten Materialzuführung miteinander vermischt werden, so dass sich an dem Fasermaterial das der Mischkammer zugeführte Matrixmaterial anheftet und anklebt.

Der 3D-Druckkopf ist dabei zum Temperieren des zugeführten Matrixmaterials ausgebildet, beispielsweise derart, dass die Mischkammer oder Teile davor zum Temperieren des Matrixmaterials mithilfe eines Heizelementes ausgebildet sind. Die Mischkammer selber steht dabei mit einem Auslass bzw. einer Austrittsöffnung des 3D-Druckkopfes kommunizierend in Verbindung, um so die gebildete Materialmischung aus Fasermaterial und Matrixmaterial zur Herstellung der dreidimensionalen Struktur auszugeben.

Die erste Materialzuführung weist einen Fasermaterial-Zuführkanal auf, der in der Mischkammer axial zu dem Auslass derart mündet, dass das quasiendlose Fasermaterial von dem Fasermaterial-Zuführkanal durch die Mischkammern zu dem Auslass hindurchführbar ist, wobei während des Hindurchführens des Fasermaterials durch die Mischkammer das in der Mischkammer befindliche Matrixmaterial sich an dem durchlaufenden Fasermaterial anheftet und so die Materialmischung aus Fasermaterial und Matrixmaterial entsprechend ausgegeben wird.

Erfindungsgemäß ist nun vorgesehen, dass der Fasermaterial-Zuführkanal in mindestens einem Abschnitt verjüngbar ist, wenn das quasiendlose Fasermaterial in dem Fasermaterial-Zuführkanal eingeführt ist. Gemäß einer vorteilhaften Weiterbildung ist vorgesehen, dass die zweite Materialzuführung mindestens einen Matrixmaterial-Zuführkanal hat, der in der Mischkammer des 3D-Druckkopfes derart mündet, dass ein in Richtung Auslass gerichteter Materialstrom des zugeführten Matrixmaterials bewirkt wird. In beiden Fällen soll ein Aufsteigen des Matrixmaterials in den Fasermaterial-Zuführkanal verhindert werden.

Gemäß dem ersten Aspekt der vorliegenden Erfindung wird demzufolge der Fasermaterial-Zuführkanal um mindestens einen Abschnitt verjüngt, wenn das quasiendlose Fasermaterial in den Zuführkanal eingeführt ist und hindurchläuft, wobei in diesem Verjüngungsabschnitt der Zuführkanal aufgrund der Verjüngung eine entsprechende Engstelle aufweist, bei der der Zuführkanal gegenüber anderen Teilen des Zuführkanals einen eingeschränkten bzw. verkleinerten Querschnitt aufweist. Durch diese Querschnittsverengung innerhalb des Fasermaterial-Zuführkanals wird somit der Widerstand beim Aufsteigen des Matrixmaterials aus der Mischkammer in den Fasermaterial-Zuführkanal erhöht, wodurch ein Aufsteigen des Matrixmaterials in Bereiche, in denen das Matrixmaterial aus dem 3D-Druckkopf austreten kann oder derart erkalten kann, dass es erstarrt, verhindert wird.

Die Erfinder haben dabei erkannt, dass durch eine Verjüngung innerhalb des Fasermaterial-Zuführkanals erreicht werden kann, dass auch ohne eine entsprechende Beaufschlagung des Zuführkanals mit Druckluft ein Aufsteigen des Matrixmaterials aus der Mischkammer in den Fasermaterial-Zuführkanal prozesssicher verhindert werden kann, ohne dass hierbei das Fasermaterial an der durch den Verjüngungsabschnitt gebildeten Engstelle bei einem Hindurchlaufen beschädigt wird.

Unter einem Verhindern des Aufsteigens von Matrixmaterial in den Fasermaterial-Zuführkanal wird insbesondere verstanden, dass das Matrixmaterial nicht so weit von der Mischkammer in den Fasermaterial-Zuführkanal aufsteigt, dass es entweder an dem 3D-Druckkopf austritt oder in derart kalte Bereiche vordringt, dass es schlussendlich erstarrt und somit ein weiteres Fördern des Fasermaterials verhindert. Ein leichtes Aufsteigen des Matrixmaterials in dem Fasermaterial-Zuführkanal im Bereich der Einmündung des Zuführkanals in die Mischkammer ist dabei solange unbedenklich, solange das Matrixmaterial nicht erstarrt oder den Prozess negativ beeinflusst.

Gemäß dem zweiten Aspekt der vorliegenden Erfindung ist der Matrixmaterial-Zuführkanal derart ausgebildet, dass er in die Mischkammer so mündet, dass ein gerichteter Materialsprung in Richtung Auslass bewirkt wird. Dies kann beispielsweise dadurch erreicht werden, dass das Matrixmaterial so in die Mischkammer eingeleitet wird, dass es nahezu parallel zu dem Fasermaterial geleitet wird, wodurch zum einen verhindert wird, dass das Fasermaterial seitlich weggedrückt wird und zum anderen dass es in dem Fasermaterial-Zuführkanal aufsteigt. Durch den gerichteten Materialstrom in Richtung Auslass wird vielmehr erreicht, dass das Matrixmaterial von dem Fasermaterial in Richtung Auslass mitgenommen wird, wodurch eine der Aufstiegsrichtung entgegenwirkende Kraft erreicht wird, die das Aufsteigen des Matrixmaterials in dem Fasermaterial-Zuführkanal verhindert. Dabei ist eine strömungsoptimierte Geometrie des 3D-Druckkopfes im Bereich der Einmündung von Fasermaterial-Zuführkanal und Matrixmaterial-Zuführkanal in die Mischkammer und der Mischkammer selber bzw. im Bereich des Zusammentreffens von Fasermaterial und Matrixmaterial so vorgesehen, dass eine gerichtete Materialströmung in Richtung Auslass bewirkt wird, die ein Aufsteigen des Matrixmaterials in den Fasermaterial-Zuführkanal verhindert.

Auch hier haben die Erfinder erkannt, dass durch einen solchen gerichteten Materialstrom innerhalb der Mischkammer ein solches Aufsteigen des Matrixmaterials in den Fasermaterial-Zuführkanal prozesssicher verhindert werden kann.

Mithilfe der vorliegenden Erfindung wird es somit möglich, einem 3D-Druckkopf sowohl Fasermaterial als auch Matrixmaterial prozesssicher so zuzuführen, dass keine Beschädigungen an dem Fasermaterial oder Verunreinigungen an dem 3D-Drucckopf zu befürchten sind, wobei es weitergehender konstruktiver Ausgestaltungen, wie beispielsweise einem Druckluftsystem zur Verhinderung des Aufsteigens von Matrixmaterial nicht mehr bedarf.

Gleichwohl ist es denkbar, dass bei einigen Systemen gemäß Anlage mit der Überdruckanlage gemäß der nachveröffentlichten DE 10 2017 124 353.4 kombiniert wird, um eine noch höhere Prozesssicherheit zu gewährleisten.

Die Anlage kann dabei eine Fasermaterialbereitstellungseinrichtung aufweisen, in der das Fasermaterial bereitgestellt wird und über eine Transporteinrichtung dem 3D-Druckkopf zugeführt wird. Die Fasermaterialbereitstellung kann dabei feststehend sein oder an dem 3D-Druckkopf so angeordnet sein, dass das Fasermagazin die Bewegung des 3D-Druckkopfes mitmacht.

Darüber hinaus kann die Anlage eine Matrixmaterialbereitstellungseinrichtung aufweisen, um das Matrixmaterial, beispielsweise in Form eines Granulat, vorzuhalten und über eine Transporteinrichtung dem 3D-Druckkopf zuzuführen. Durch ein entsprechendes Temperieren der meist in fester Form vorliegenden Matrixmaterialien kann dann dieses aufgeschmolzen und entsprechend verarbeitet werden.

In einer vorteilhaften Ausführungsform hat der Fasermaterial-Zuführkanal eine Fördereinrichtung mit mindestens zwei gegenüberliegenden Förderelementen, zwischen denen das Fasermaterial hindurchführbar oder hindurchgeführt ist, wobei zwischen den beiden Förderelementen der mindestens eine Verjüngungsabschnitt ausbildbar ist. Bei den Förderelementen kann es sich beispielsweise um Rollen oder Walzen handeln, die jeweils einen zylindrischen Körper aufweisen, der sich um eine quer zur Förderrichtung liegende Achse drehen kann, wobei zwischen den beiden Walzen dann das Fasermaterial hindurchgeführt wird. Der Abstand zwischen den beiden Walzen in Bezug auf deren Mantelfläche ist dabei im Druckbetrieb, bei dem das Fasermaterial durch den 3D-Druckkopf hindurchgeführt wird, kleiner als in anderen Abschnitten des Fasermaterial-Zuführkanals, so dass durch die beiden gegenüberliegenden Förderelemente bzw. Walzen der Verjüngungsabschnitt mit der entsprechenden Engstelle ausgebildet wird.

Es ist ebenfalls denkbar, dass als Förderelemente entsprechende Förderbänder ähnlich einer Gleiskette aus einem weichen Material vorgesehen sind, wodurch der Verjüngungsabschnitt in Förderrichtung deutlich vergrößert werden kann. Es entsteht somit nicht nur eine punktuelle Engstelle, sondern eine Engstelle über einen gewissen Förderabschnittsbereich hinweg, wodurch gerade bei hohen Drücken des Matrixmaterials ein weiteres Aufsteigen entlang der Engstelle verhindert wird. Bei den Förderbändern als Förderelemente ist dabei ebenfalls vorgesehen, dass zwei Förderbänder gegenüberliegend angeordnet sind, so dass zwischen diesen beiden Förderbändern entlang der Förderrichtung das quasiendlose Fasermaterial in den Fasermaterialzuführkanal hindurchgeführt ist.

In beiden Fällen, d.h. sowohl bei der Verwendung von Walzen als Förderelement als auch bei der Verwendung von Förderbändern als Förderelemente wird durch die Drehbewegung der Walzen oder der Förderelemente in Förderrichtung des Weiteren eine Gegenkraft auf das aufsteigende Matrixmaterial erzeugt, die ein weiteres Aufsteigen in dem Fasermaterial-Zuführkanal verhindert. Denn sowohl die Walzen als auch die Förderbänder drehen sich dabei in die entgegengesetzte Richtung zu der Aufstiegstendenz des Matrixmaterials und unterstützen dabei den Effekt der Engstelle beim Verhindern des Aufsteigens des Matrixmaterials weiter.

In einer weiteren vorteilhaften Ausführungsform ist eines der Förderelemente, ggf. auch beide Förderelemente einer Fördereinrichtung beweglich ausgebildet, so dass die Breite des Verjüngungsabschnittes zwischen den beiden Förderelementen einstellbar ist. Hierdurch lässt sich der Abstand zwischen den beiden Förderelementen einstellen und damit die Breite der Engstelle definieren, so dass zunächst vor dem Druckprozess eine sehr große Breite gewählt wird, um das Fasermaterial durch den Fasermaterial-Zuführkanal hindurchführen zu können, wobei anschließend dann durch Bewegen mindestens eines der Förderelemente relativ zu dem Fasermaterial oder dem Fasermaterial-Zuführkanal dann die Breite des Verjüngungsabschnittes bzw. der Engstelle auf das gewünschte Maß eingestellt wird.

Grundsätzlich ist es vom Erfindungsgedanken umfasst, dass die Förderelemente auch einen Abstand aufweisen, der 0 ist, so dass die Förderelemente in einem Kontaktbereich anliegen. Der Verjüngungsabschnitt ist dabei soweit verjüngt, dass der Zuführkanal des Fasermaterials zunächst geschlossen ist. In diesem Fall ist es vorteilhaft, wenn mindestens eines der Förderelemente (vorzugsweise alle) eine weiche bzw. flexible Oberfläche haben, so dass ein zwischen den Förderelementen hindurchgeführtes Fasermaterial in die Förderelemente eingedrückt wird, so dass sowohl ein Hindurchführen des Fasermaterials durch die Förderelemente einerseits gewährleistet wird und andererseits der Zuführkanal im restlichen Bereich durch die aneinander liegenden Förderelemente geschlossen ist. Handelt es sich bei den Förderelementen beispielsweise um Walzen oder Förderbänder, so können diese innerhalb des Fasermaterial-Zuführkanals im Verjüngungsbereich so angeordnet sein, dass sie sich gegenseitig berühren und somit den Zuführkanal schließen. Ein zwischen den Walzen oder Förderbändern hindurchgeführtes Fasermaterial drückt sich dann in die weiche Oberfläche der Walzen oder Förderbänder ein, so dass das Fasermaterial durch diese maximale Engstelle hindurchführbar ist, in den übrigen Bereichen des Fasermaterial-Zuführkanals jedoch aufgrund der maximalen Verjüngung des Zuführkanals geschlossen ist.

Dadurch wird ein semipermeabler Durchgang geschaffen, der ein Hindurchführen des Fasermaterials in Förderrichtung erlaubt, ein Aufsteigen des Matrixmaterials entgegen der Förderrichtung jedoch verhindert. Ein Hindurchführen des Fasermaterials in Förderrichtung ist deshalb möglich, da die aneinander liegenden Walzen oder Förderbänder eine weiche Oberfläche haben und sich das Fasermaterial dort hineindrückt und somit hindurchführbar ist, während in den übrigen Bereichen des Fasermaterial-Zuführkanals dieser durch die anliegenden Walzen bzw. Förderbänder für das Matrixmaterial geschlossen ist.

Es ist demzufolge ganz besonders vorteilhaft, wenn die Förderelemente eine größere Breite aufweisen als das Fasermaterial, wobei sich die gegenüberliegenden Förderelemente seitlich neben dem durchlaufenden Fasermaterial berühren, wenn das quasiendlose Fasermaterial in dem Fasermaterial-Zuführkanal eingeführt ist. Hierbei ist es ganz besonders vorteilhaft, wenn die Förderelemente eine entsprechende Oberfläche aufweisen, die flexibel ist, um so das hindurchgeführte Fasermaterial nicht übermäßig zu strapazieren oder ggf. sogar zu beschädigen.

In einer weiteren vorteilhaften Ausführungsform weist der 3D-Druckkopf mindestens zwei Fördereinrichtungen (jeweils beispielsweise in Form von Walzenpaaren oder Förderbandpaaren) auf, deren axiale Förderrichtung nicht deckungsgleich ist. Vielmehr wird das Fasermaterial von einem Förderelement der ersten Fördereinrichtung in Richtung der zweiten Fördereinrichtung umgelenkt, wodurch insbesondere bei Walzen als Förderelemente erreicht werden kann, dass das Fasermaterial nicht nur punktuell von den Walzen kontaktiert wird, sondern linienförmig. Gerade bei angetriebenen Walzen zur Unterstützung des Förderns der Fasermaterialien kann hierdurch die Belastung auf das Fasermaterial auf das Fasermaterial reduziert werden.

Hierbei ist es selbstverständlich denkbar, dass eine dritte Fördereinrichtung nach der zweiten Fördereinrichtung (in Bezug auf die Förderrichtung) vorgesehen ist, wobei die zweite Fördereinrichtung dann das Fasermaterial in Richtung der dritten Fördereinrichtung umlenkt.

Jede dieser Fördereinrichtungen bildet dabei ggf. einen Verjüngungsabschnitt, so dass bei Vorliegen von drei Fördereinrichtungen auch drei Verjüngungsabschnitte in dem Fasermaterial-Zuführkanal vorhanden sind. Durch einen derart kaskadierten Aufbau der einzelnen Fördereinrichtungen kann ein Aufsteigen von Matrixmaterial in dem Fasermaterial-Zuführkanal sehr gut sichergestellt werden und darüber hinaus die Belastung auf das Fasermaterial reduziert werden.

Wie bereits angesprochen, ist es vorteilhaft, wenn mindestens eines der Förderelemente einer Fördereinrichtung drehbar angetrieben ist, um so den Förderprozess zu unterstützen.

In einer weiteren vorteilhaften Ausführungsform ist eine Nadel oder ein nadelförmiges Element vorgesehen, das einen Innendurchgang hat, durch den das Fasermaterial hindurchführbar ist. Die Nadel oder das nadelförmige Element sind dabei so ausgebildet, dass sie in den Fasermaterial-Zuführkanal einsetzbar sind. Hierzu weist die Nadel bzw. das nadelförmige Element einen Querschnitt auf, der den Querschnitt des Fasermaterial-Zuführkanals entspricht, so dass die Nadel bzw. das nadelförmige Element formschlüssig in den Fasermaterial-Zuführkanal einsetzbar ist. Auch die Nadel bzw. das nadelförmige Element weist hierbei einen Verjüngungsabschnitt auf, durch den der Innendurchgang der Nadel verjüngbar ist.

Das nadelförmige Element hat hierbei den Vorteil, dass vor dem Druckprozess das Fasermaterial in den Innendurchgang des nadelförmigen Elementes gefädelt werden kann und anschließend der bereits hindurchgeführte Teil des Fasermaterials in die größere Öffnung des Fasermaterial-Zuführkanals eingeführt werden kann, was die Installation des Fasermaterials auch durch den Mischkopf und den Auslass des 3D-Druckkopfes vereinfacht. Wurde das Fasermaterial durch den gesamten 3D-Drucckopf hindurchgeführt, kann dann die Nadel bzw. das nadelförmige Element in den Fasermaterial-Zuführkanal eingesetzt werden, so dass sich nach Abschluss der Installation das Fasermaterial durch den Innendurchgang der Nadel, die nunmehr in dem Fasermaterial-Zuführkanal eingesetzt ist, durch den Mischkopf und den Auslass des 3D-Druckkopfes erstreckt. Anschließend kann nun, sofern nicht bereits geschehen, der Verjüngungsabschnitt und die Breite der Engstelle im Verjüngungsabschnitt entsprechend eingestellt werden.

Hierbei ist es nur ganz besonders vorteilhaft wenn die Nadel bzw. das nadelförmige Element in seinem Verjüngungsabschnitt aus einem flexiblen oder verformbaren Material gebildet ist, so dass durch eine Kraftbeaufschlagung von außen in Richtung Innendurchgang der Nadel der Innendurchgang verjüngbar ist und somit die Engstelle ausgebildet werden kann. So kann ein durchgehender Innendurchgang anfänglich bereitgestellt werden, durch den problemlos das Fasermaterial hindurchführbar ist, wobei beim Einsetzen der Nadel in den Fasermaterial-Zuführkanal dann entsprechend eine Kraft auf diesen Verjüngungsabschnitt mit dem flexiblen Material auf die Nadel ausgeübt werden kann, wodurch die Engstelle ausgebildet werden kann. Hierfür ist es vorteilhaft, wenn in dem Fasermaterial-Zuführkanal Erhebungen bzw. Verjüngungsvorsprünge an den Stellen vorgesehen sind, an denen sich auch das flexible Material der Nadel befindet. Wird die Nadel nun in den Fasermaterial-Zuführkanal eingesteckt bzw. eingesetzt, so drücken diese Verjüngungsvorsprünge des Fasermaterial-Zuführkanals auf das flexible Material im Verjüngungsbereich der Nadel und verjüngen so den Innendurchgang der Nadel, wodurch die gewünschte Engstelle im Verjüngungsbereich innerhalb des Innendurchganges ausgebildet wird.

Vorteilhafterweise ist die Oberfläche des Innendurchganges der Nadel sehr glatt, so dass das Fasermaterial im Verjüngungsbereich der Nadel auch an der Innenwandung der Nadel an der glatten Oberfläche anliegen kann und diese berühren kann, ohne hierbei beschädigt zu werden.

Das Prinzip der Nadel bzw. des nadelförmigen Elementes kann dabei mit den oben genannten Ausführungsformen jederzeit kombiniert werden.

In einer weiteren vorteilhaften Ausführungsform mündet der Matrixmaterial-Zuführkanal unter einem Winkel kleiner als 45 Grad, vorzugsweise kleiner als 30 Grad, in Bezug zu dem Fasermaterial, das im Bereich der Mischkammereinmündung des Fasermaterial-Zuführkanals in die Mischkammer mündet. Hierdurch wird erreicht, dass das Matrixmaterial einen Richtung Auslass gerichteten Materialstrom bewirkt, sodass tendenziell verhindert werden kann, dass das Matrixmaterial in den Fasermaterial-Zuführkanal aufsteigt.

In einer weiteren vorteilhaften Ausführungsform ist der Fasermaterial-Zuführkanal zumindest abschnittsweise innerhalb des Matrixmaterial-Zuführkanal angeordnet, sodass im Innendurchgang des Matrixmaterial-Zuführkanals der Fasermaterial-Zuführkanal liegt und das Fasermaterial somit auch durch den Matrixmaterial-Zuführkanal durchgeführt wird. Hierdurch kann sichergestellt werden, dass sowohl Matrixmaterial als auch Fasermaterial in den Mischkopf so einmünden, dass sie beide den gleichen gerichteten Materialstrom haben und somit keine Tendenz geschaffen wird, dass das Matrixmaterial in den Fasermaterial-Zuführkanal aufsteigt. Das Matrixmaterial wird dabei in Richtung Auslass gedrückt, der baubedingt entgegen der Einmündung des Fasermaterial-Zuführkanals in die Mischkammer angeordnet ist, wodurch ein aufsteigen des Matrixmaterials in Richtung der Einmündung des Fasermaterial-Zuführkanals verhindert wird.

Hierbei ist es ganz besonders vorteilhaft, wenn sich in dem Matrixmaterial-Zuführkanal eine Förderschnecke zum Fördern des Matrixmaterials in Richtung Mischkammer befindet, wobei der Fasermaterial-Zuführkanal in der Drehachse der Förderschnecke liegt. Die Förderschnecke drückt somit in Richtung Mischkammer das Matrixmaterial, während in der Drehachse der Förderschnecke der Fasermaterial-Zuführkanal entlangläuft und das Fasermaterial somit in der Drehachse der Förderschnecke transportiert wird. Auch hierdurch kann erreicht werden, dass ein gerichteter Materialstrom des Matrixmaterials in der Mischkammer in Richtung Auslass bewirkt wird.

Um Beschädigungen beim Drehen der Förderschnecke um die Achse des Fasermaterials an dem Fasermaterial zu verhindern, ist es vorteilhaft, wenn zumindest eine Spitze des Fasermaterial-Zuführkanals an der Einmündung in die Mischkammer oder aber der gesamte Fasermaterial-Zuführkanal feststehend ist und sich nicht mit dreht, während sich die Förderschnecke um die Achse dreht. Damit dreht sich die Spitze oder der gesamte Fasermaterial-Zuführkanal nicht um das Fasermaterial herum, wodurch ein Abreißen des Fasermaterials und einer Tordierung verhindert werden kann.

Hierbei ist es ebenfalls denkbar, dass in den Fasermaterial-Zuführkanal eine Nadel bzw. ein nadelförmiges Element, wie oben beschrieben, einführbar ist, um so eine Engstelle im Fasermaterial-Zuführkanal zu erzeugen und so zusätzlich eine Hürde für aufsteigendes Matrixmaterial zu bieten.

Die Erfindung wird anhand der beigefügten Figuren beispielhaft erläutert. Es zeigen:
- Figur 1: - schematische Darstellung des Verjüngungsprinzips mit Walzen;
- Figur 2: - schematische Darstellung des Verjüngungsprinzips mit zwei Walzenpaaren;
- Figur 3: - schematische Darstellung einer weiteren Ausführungsform;
- Figur 4: - schematische Darstellung des Verjüngungsprinzips mit Förderbändern;
- Figur 5: - schematische Darstellung des 3D-Druckkopfes mit einer Nadel;
- Figur 6: - Detaildarstellung einer solchen Nadel;
- Figur 7: schematische Darstellung mit einer Förderschnecke.

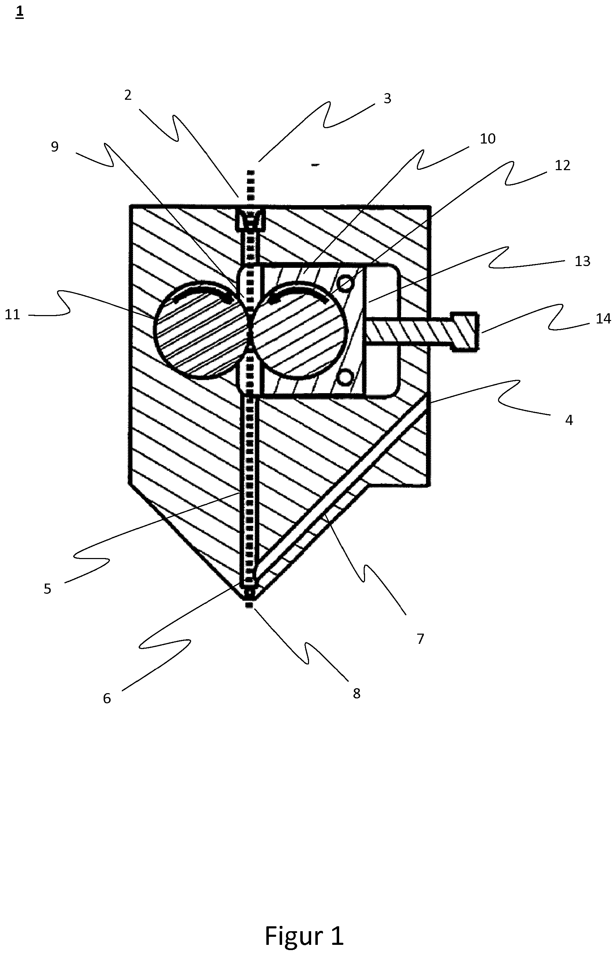

Figur 1 zeigt schematisch einen Teil eines 3D-Druckkopfes 1, mit dem ein Faser-Kunststoffverbund gedruckt werden soll. Der 3D-Druckkopf 1 weist hierfür eine Fasermaterialzuführung 2 zum Zuführen eines Fasermaterials 3 sowie eine Matrixmaterialzuführung 4 zum Zuführen eines Matrixmaterials auf. Die Fasermaterialzuführung 2 hat hierfür einen Fasermaterial-Zuführkanal 5, in dem das Fasermaterial 3 zu einer Mischkammer 6 geleitet wird. Die Mischkammer 6 ist im Ausführungsbeispiel der Figur 1 nur schematisch angedeutet. In die Mischkammer 6 mündet darüber hinaus auch ein Matrixmaterial-Zuführkanal 7, sodass in der Mischkammer 6 die Materialmischung aus Fasermaterial 3 und Matrixmaterial gebildet werden kann.

Am unteren Ende der Mischkammer 6 befindet sich ein Auslass 8, aus dem dann die in der Mischkammer 6 gebildete Materialmischung ausgegeben wird, um die dreidimensionale Struktur entsprechend zu drucken.

Erfindungsgemäß weist der 3D-Druckkopf 1 in dem Fasermaterial-Zuführkanal 5 eine Fördereinrichtung 10 auf, die eine erste Walze 11 und eine zweite Walze 12 hat. Die beiden Walzen 11 und 12 der Fördereinrichtung 10 sind dabei gegenüberliegend angeordnet, wobei das Fasermaterial 3, das in dem Fasermaterial-Zuführkanal 5 in Richtung Auslass geführt wird, zwischen diesen beiden Walzen 11 und 12 hindurchgeführt wird.

Mit Hilfe einer Verstelleinrichtung 13 kann dabei die zweite Walze 12 gegenüber der ersten feststehenden Walze 11 linear bewegt werden, indem hierfür beispielsweise eine Verstellschraube 14, die in ein Gewinde in dem Gehäuse des 3D-Druckkopfes eingreift, gedreht wird, wodurch die zweite Walze 11 eine Linearbewegung relativ zu der ersten Walze 11 ausführt.

Durch das lineare Bewegen mit Hilfe der Verstelleinrichtung 13 kann der Abstand zwischen der ersten Walze 11 und der zweiten Walze 12 in den Bereich, in dem das Fasermaterial 3 hindurchgeführt wird, eingestellt werden, wodurch der zwischen den Walzen 11 und 12 gebildete Verjüngungsbereich 9 in dem Fasermaterial-Zuführkanal 5 gebildet und hinsichtlich der Breite bzw. des Abstandes einstellbar ist.

Die Walzen 11 und 12 können dabei eine weiche bzw. flexible Oberfläche aufweisen, die so ausgebildet ist, dass das hindurchgeführte Fasermaterial 3 sich in die Oberfläche der Walzen 11 und 12 hineindrücken kann, sodass mit Hilfe der Verstelleinrichtung 13 die Walze 12 auch kontaktbehaftet an der Walze 11 seitlich neben dem Fasermaterial 3 anliegen kann. Hierdurch wird der Durchgang für das Fasermaterial in Richtung entgegengesetzt der Förderrichtung (in Richtung Auslass) unterbrochen.

Des Weiteren drehen sich die Walzen 11 und 12 in Förderrichtung (in Richtung Auslass 8), was ebenfalls einem Aufsteigen von Matrixmaterial in dem Fasermaterial-Zuführkanal 5 entgegen wirkt. Eine oder beide Walzen können aktiv durch einen Motor angetrieben sein.

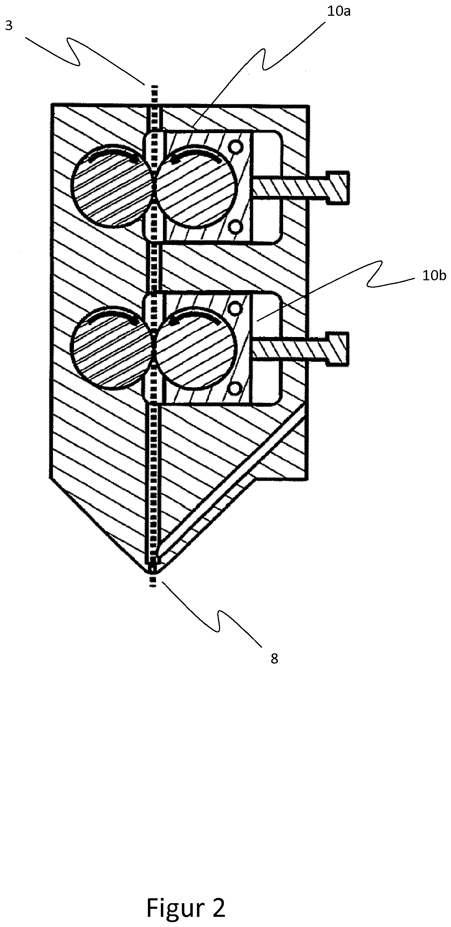

In Figur 2 ist ein Ausführungsbeispiel vorgesehen, bei denen zwei Fördereinrichtungen 10a und 10b hintereinander geschaltet sind. In einer derartigen kaskadierten Form wird eine bessere Abdichtung erreicht, was beispielsweise dann vorteilhaft ist, wenn mit hohem Drücken beim Injizieren des Matrixmaterials gearbeitet wird.

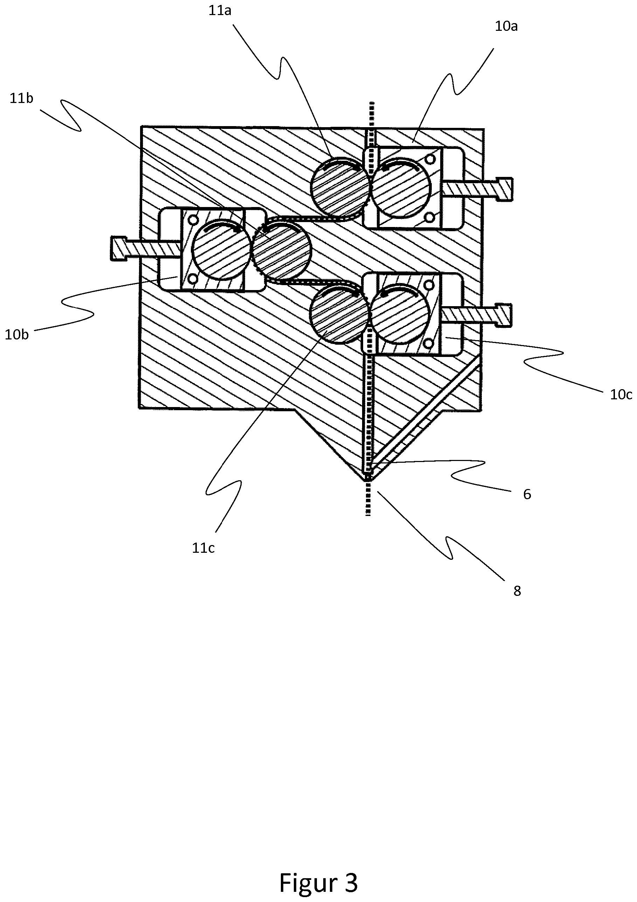

In Figur 3 sind insgesamt 3 Fördereinrichtungen 10a, 10b und 10c gezeigt, die allesamt hinsichtlich der Breite des Verjüngungsbereiches einstellbar sind. Allerdings ist die zweite Fördereinrichtung 10b axial versetzt zu den Fördereinrichtungen 10a und 10c, sodass durch die erste Walze 11a der ersten Fördereinrichtung 10a das Fasermaterial umgelenkt wird in Richtung der zweiten Fördereinrichtung 10b. Die dortige erste Walze 11b dient dabei wiederum zur Umlenkung des Fasermaterials in Richtung der dritten Fördereinrichtung 10c, wobei die dortige Walze 11c das Fasermaterial dann in Richtung Mischkammer 6 umlenkt. Die Umlenkwalzen 11a, 11b, 11c in dem Ausführungsbeispiel der Figur 3 sind dabei nicht verstellbar ausgebildet.

Beim Umlenken des Fasermaterials kontaktiert das Fasermaterial die jeweilige Walze 11 nicht nur punktförmig, sondern linienförmig entlang der Förderrichtung, wodurch die Belastung auf die Fasern verringert wird. Weiterhin bauen sich durch die Drehung der Welle entlang des feststehenden Gehäuses über eine wesentliche längere Strecke Scherkräfte zwischen dem hochviskosen Kunststoff und dem Gehäuse der Welle aus. So wird eine effektive Abdichtung auf Grund der rotierenden Förderbewegung gegenüber dem unter Druck stehenden Kunststoff erreicht. Gegebenenfalls sind andere als die gezeigten Versatze zu realisieren, ebenso ist die Anzahl der verwendeten Förder- und Dichtungskombinationen variabel.

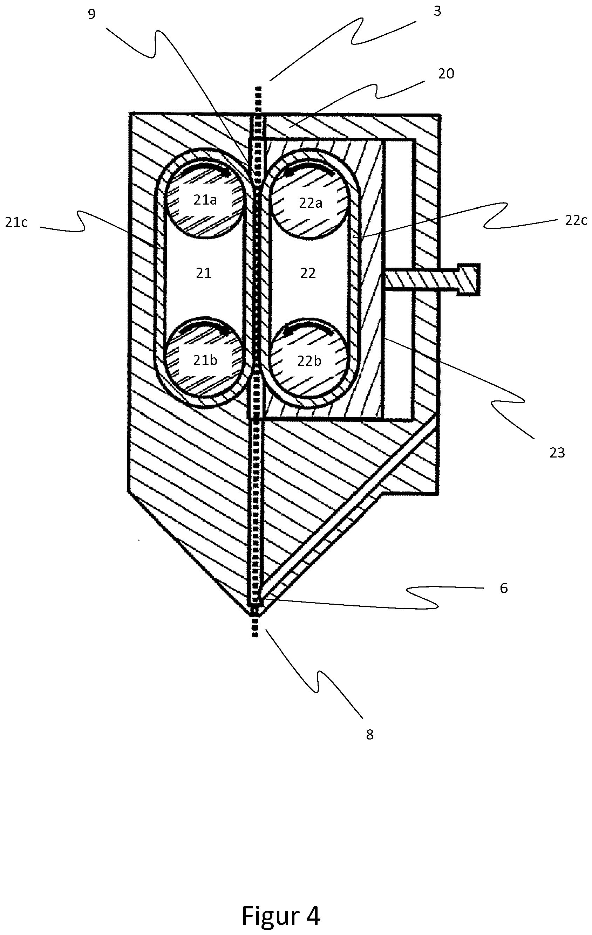

Figur 4 zeigt ein Prinzip einer Fördereinrichtung 20, die aus zwei Förderbändern 21 und 22 gebildet wird. Die Förderbänder weisen hierfür drehbare Achsen 21a, 21b bzw. 22a und 22b auf, um die ein jeweiliges Förderband 21c bzw. 22c gelegt wurde. Zwischen den Förderbändern 21 und 22 wird dabei das Fasermaterial 3 in Richtung Mischkammer 6 gefördert. Die Förderbänder 21 und 22 bauen dabei einen linienförmigen Kontakt zum Fasermaterial auf, wodurch ebenfalls die Belastung der Fasern gering gehalten wird. Gleichzeitig stellt sich zwischen den umlaufenden Förderbändern 21c und 22c und dem unter Druck stehenden aufgeschmolzenen Matrixmaterial eine Scherwirkung über die lange Strecke (maximal begrenzt durch die Länge der Förderbänder) ein, die das Aufsteigen des Matrixmaterials entgegen der Mischkammer 6 effektiv verhindert. Auch dieses Konzept kann kaskadiert aufgebaut werden, wobei zwischen den jeweiligen drehbaren Achsen 21a, 21b sowie 22a und 22c weitere Stützrollen als Stützelement bei langen Förderbändern realisiert werden können.

Wie in Figur 4 gezeigt, ist ebenfalls eine Verstelleinrichtung 23 vorgesehen, die so ausgebildet ist, dass das gesamte Förderband 22 linear gegenüber dem Förderband 21 bewegbar ist, so dass der Abstand zwischen den Förderbändern 21 und 22 einstellbar ist. Hierdurch kann der Verjüngungsbereich 9, der zwischen den Förderbändern 21 und 22 ausgebildet wird, entsprechend eingestellt werden. Denkbar ist selbstverständlich auch, dass beide Förderbänder 21 und 22 verstellbar ausgebildet sind.

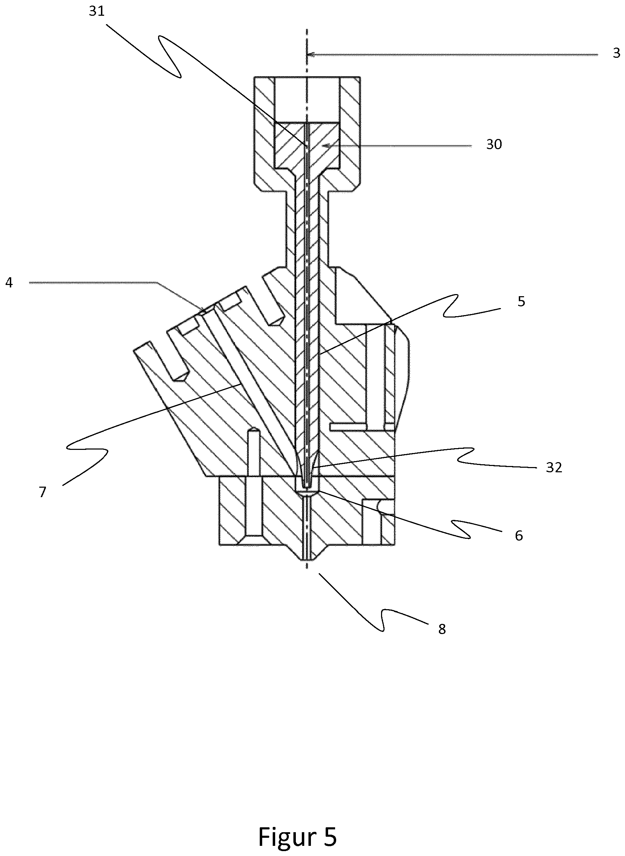

Figur 5 zeigt ein Ausführungsbeispiel, bei dem in dem Fasermaterial-Zuführkanal 5 des Druckkopfes 1 eine Nadel 30 eingesetzt ist, die einen Innendurchgang 31 hat, in dem das Fasermaterial 3 hindurchgeführt ist. Der Innendurchgang 31 der Nadel 30 mündet dabei in der Mischkammer 6 des Druckkopfes 1, in dem auch der Matrixmaterial-Zuführkanal 7 der Matrixmaterial-Zuführung 4 mündet.

Die Spitze 32 der Nadel ist dabei konvex geformt und ermöglicht so einen Materialstrom des Matrixmaterials aus dem Matrixmaterial-Zuführkanal 7, der in Richtung Auslass 8 gerichtet ist. Der in Richtung der Austrittsöffnung gerichtete Materialstrom des Matrixmaterials sorgt dafür, dass die Faser des Fasermaterials 3 mitgenommen wird. Durch die aufgeprägte Fließrichtung des Matrixmaterials in Richtung Auslass 8 ist hier ein Aufsteigen des Matrixmaterials in Richtung der Nadel nur schwierig möglich. Unterstützt werden kann das ganze durch die Druckluft, wie es bereits in der nachveröffentlichten DE 10 2017 124 353.4 gezeigt ist. Allerdings kann hier mit wesentlich geringem Druck gearbeitet werden, da je nach Druck des Matrixmaterials ein Aufsteigen des Matrixmaterials in den Innendurchgang 31 der Nadel nur schwierig möglich ist.

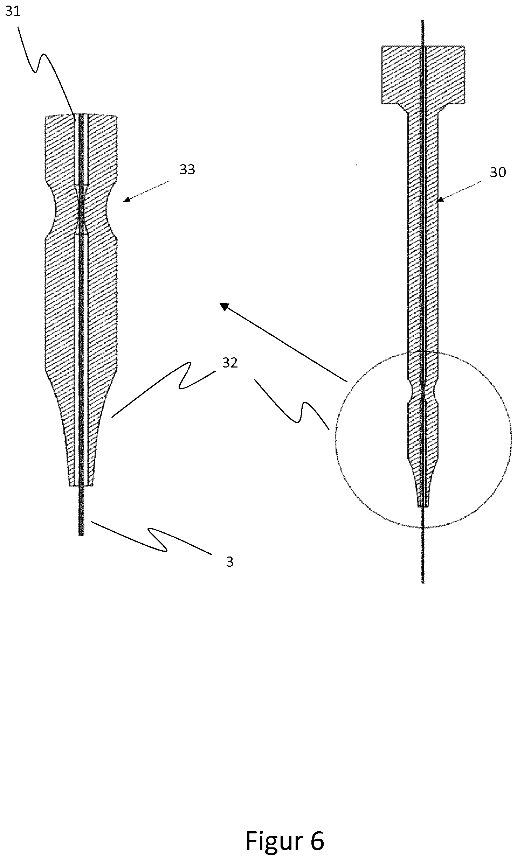

Figur 6 zeigt im Detail die Nadel 30, die im unteren Bereich einen Verjüngungsabschnitt 33 hat. Zumindest in diesem Bereich ist die Nadel 30 aus einem flexiblen Material, so dass sie in Richtung des Innendurchgangs 31 eingedrückt werden kann. Hierdurch kann der Querschnitt des Innendurchgangs 31 verkleinert werden, so dass die entsprechende Engstelle gebildet werden kann. Vorzugsweise ist die gesamte Nadel aus einem solchen flexiblen Material gebildet.

In dem Fasermaterial-Zuführkanal befinden sich nun an dieser Stelle des Verjüngungsabschnittes 33 entsprechende Vorsprünge, die mit dem flexiblen Material im Verjüngungsbereich 33 der Nadel 30 so zusammendrücken, dass die Nadel im Verjüngungsbereich 33 zusammengedrückt wird und somit die Engstelle innerhalb des Innendurchgangs 31 ausgebildet werden kann, wenn die Nadel in den Fasermaterial-Zuführkanal 5 eingesetzt wird.

Ist die Nadel jedoch nicht in diesen Zuführkanal 5 eingesetzt, so befindet sich im Verjüngungsbereich 33 keine Engstelle, so dass das Fasermaterial problemlos durch den Innendurchgang 31 hindurchgeführt werden kann. Dies erleichtert die Installation. Anschließend wird die Nadel 30 dann in den Zuführkanal 5 eingesetzt, wodurch dann aufgrund der Vorsprünge in den Zuführkanal 5 der Verjüngungsbereich 33 in dem Innendurchgang der Nadel 30 ausgebildet wird.

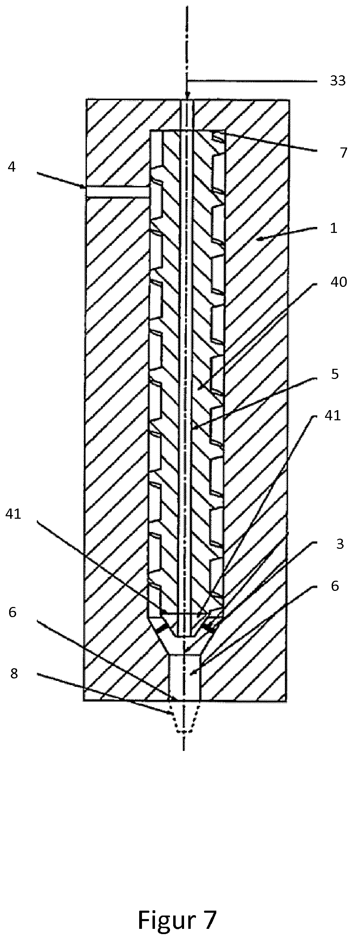

Figur 7 zeigt schließlich ein Ausführungsbeispiel, bei dem der Fasermaterial-Zuführkanal 5 innerhalb des Matrixmaterial-Zuführkanals 7 verläuft. Dabei ist in dem Fasermaterial-Zuführkanal 7 eine Förderschnecke 40 angeordnet, die das Matrixmaterial in die Mischkammer 8 befördert. Die Förderschnecke 40 dreht sich dabei um den in der Achse der Förderschnecke 40 liegenden Zuführkanal 5 des Fasermaterials.

Dabei kann vorgesehen sein, dass eine Spitze 41 des Fasermaterial-Zuführkanals 5 nicht drehbar ausgebildet ist, so dass sich um diese feststehende Spitze 41 die Förderschnecke 40 bewegt. Hierdurch kann ein eventuelles Tordieren der Fasern beim Austritt in die Mischkammer verhindert werden. Gleichzeitig wird auch hier durch die Spitze 41 ein gerichteter Materialstrom des Matrixmaterials in Richtung Auslass 8 erzeugt, wodurch das Fasermaterial effektiv mitgenommen wird und ein Aufsteigen in dem Fasermaterial-Zuführkanal 5 verhindert wird.

Denkbar ist allerdings auch, dass der gesamte Fasermaterial-Zuführkanal 5 gegenüber der Förderschnecke 40 feststehend ist, so dass sich die Förderschnecke 40 um diesen Fasermaterial-Zuführkanal 5 herum dreht. Dies hat den Vorteil, dass keine Stege benötigt werden, um die Spitze 41 entsprechend abzustützen. Zusätzlich entsteht der Vorteil, dass die Faser nicht sporadisch an der Innenwand der drehenden Schnecke haftet und dadurch tordiert bzw. beschädigt werden kann.

### Bezugszeichenliste

- 1: - 3D-Druckkopf
- 2: - Fasermaterialzuführung
- 3: - Fasermaterial
- 4: - Matrixmaterial-Zuführung
- 5: - Fasermaterial-Zuführkanal
- 6: - Mischkammer
- 7: - Matrixmaterial-Zuführkanal
- 8: - Auslass
- 9: - Verjüngungsabschnitt
- 10: - Fördereinrichtung
- 11: - erste Walze
- 12: - zweite Walze
- 13: - Verstelleinrichtung
- 14: - Verstellschraube
- 20: - Fördereinrichtung mit Förderbändern
- 21: - erstes Förderband
- 22: - zweites Förderband
- 30: - Nadel
- 31: - Innendurchgang der Nadel
- 32: - Spitze der Nadel
- 33: - Verjüngungsabschnitt der Nadel
- 40: - Förderschnecke
- 41: - Spitze des Fasermaterial-Zuführkanals

## Patentansprüche

1. Anlage zum Herstellen von dreidimensionalen Strukturen, die zwei oder mehr unterschiedliche Werkstoffe aufweisen, mit einem 3D-Druckkopf (1), der eine erste Materialzuführung (2) zum Zuführen eines quasiendlosen Fasermaterials (3) zu dem 3D-Druckkopf (1) und wenigstens eine zweite Materialzuführung (4) zum Zuführen eines Matrixmaterials zu dem 3D-Druckkopf (1) hat, die in einer gemeinsamen Mischkammer (6) des 3D-Druckkopfes (1) münden, wobei der 3D-Druckkopf (1) zum Temperieren des zugeführten Matrixmaterials und die gemeinsame Mischkammer (6) zum Bilden einer Materialmischung aus dem zugeführten quasiendlosen Fasermaterial (3) und dem zugeführten Matrixmaterial ausgebildet ist, wobei die Mischkammer (6) mit einem Auslass des 3D-Druckkopfes (1) kommunizierend in Verbindung steht, der zum Ausgeben der gebildeten Materialmischung eingerichtet ist, um die dreidimensionale Struktur herzustellen, wobei die erste Materialzuführung (2) einen Fasermaterial-Zuführkanal (5) hat, der in der Mischkammer (6) axial zu dem Auslass (8) derart mündet, dass das quasiendlose Fasermaterial (3) von dem Fasermaterial-Zuführkanal (5) durch die Mischkammer (6) zu dem Auslass (8) hindurchführbar ist, **dadurch gekennzeichnet, dass**
der Fasermaterial-Zuführkanal (5) in mindestens einem Abschnitt verjüngbar ist, wenn das quasiendlose Fasermaterial (3) in dem Fasermaterial-Zuführkanal (5) eingeführt ist.

2. Anlage nach Anspruch 1, **dadurch gekennzeichnet, dass** die zweite Materialzuführung (4) mindestens einen Matrixmaterial-Zuführkanal (7) hat, der in der Mischkammer (6) derart mündet, dass ein in Richtung Auslass (8) gerichteter Materialstrom des zugeführten Matrixmaterials bewirkt wird.

3. Anlage nach Anspruch 1 oder 2, **dadurch gekennzeichnet, dass** der Fasermaterial-Zuführkanal (5) eine Fördereinrichtung (10) mit mindestens zwei gegenüberliegenden Förderelementen hat, zwischen denen das Fasermaterial (3) hindurchführbar oder hindurchgeführt ist, wobei zwischen den beiden Förderelemente der mindestens eine Verjüngungsabschnitt (9) ausbildbar ist.

4. Anlage nach Anspruch 3, **dadurch gekennzeichnet, dass** mindestens ein Förderelement der Fördereinrichtung (10) relativ zu dem Fasermaterial (3), dem Fasermaterial-Zuführkanal (5) und/oder dem jeweils gegenüberliegenden anderen Förderelement bewegbar derart ausgebildet ist, dass die Breite des Verjüngungsabschnittes (9) zwischen den beiden Förderelementen einstellbar ist.

5. Anlage nach Anspruch 3 oder 4, **dadurch gekennzeichnet, dass** die Förderelemente der Fördereinrichtung (10) quer zur Förderrichtung breiter sind als das quasiendlose Fasermaterial (3), wobei sich die gegenüberliegenden Förderelemente seitlich neben dem durchlaufenden Fasermaterial (3) berühren, wenn das quasiendlose Fasermaterial (3) in dem Fasermaterial-Zuführkanal (5) eingeführt ist.

6. Anlage nach einem der Ansprüche 3 bis 5, **dadurch gekennzeichnet, dass** eine der Fördereinrichtungen (10) ein Walzenpaar ist, das als Förderelemente zwei gegenüberliegende Walzen (11, 12) hat, zwischen denen das quasiendlose Fasermaterial (3) hindurchführbar ist, und/oder dass eine der Fördereinrichtungen (20) ein Förderbandpaar ist, das als Förderelemente zwei gegenüberliegende Förderbänder (21, 22) hat, zwischen denen das quasiendlose Fasermaterial (3) hindurchführbar ist.

7. Anlage nach einem der Ansprüche 3 bis 6, **dadurch gekennzeichnet, dass** mindestens eine weitere zweite Fördereinrichtung (20) vorgesehen ist, die in Förderrichtung nach der ersten Fördereinrichtung (10) in dem Fasermaterial-Zuführkanal (5) angeordnet ist, wobei eines der Förderelemente der ersten Fördereinrichtung (10) das quasiendlose Fasermaterial (3) in Richtung der zweiten Fördereinrichtung (20) umlenkt.

8. Anlage nach einem der Ansprüche 3 bis 7, **dadurch gekennzeichnet, dass** mindestens eines der Förderelemente der Fördereinrichtung (10) drehbar angetrieben ist.

9. Anlage nach einem der vorhergehenden Ansprüche, **dadurch gekennzeichnet, dass** eine Nadel (30) mit einem Innendurchgang (31) vorgesehen ist, in den das quasiendlose Fasermaterial (3) einführbar ist, wobei die Nadel (30) in den Fasermaterial-Zuführkanal (5) formschlüssig einsetzbar ist, wenn das Fasermaterial (3) in den Innendurchgang (31) der Nadel (30) eingeführt ist, und wobei die Nadel (30) einen Verjüngungsabschnitt (33) ausbildet, an dem der Innendurchgang (31) der Nadel (30) verjüngbar ist.

10. Anlage nach Anspruch 9, **dadurch gekennzeichnet, dass** die Nadel (30) zumindest im Verjüngungsabschnitt (33) ein flexibles oder verformbares Material hat, das durch eine Kraft in Richtung Innendurchgang (31) diesen verjüngt.

11. Anlage nach Anspruch 10, **dadurch gekennzeichnet, dass** der Fasermaterial-Zuführkanal (5) in dem Bereich, in dem der Verjüngungsabschnitt (33) der Nadel (30) im eingesetzten Zustand vorgesehen ist, min. einen Vorsprung aufweist, die mit der Nadel (30) im Verjüngungsabschnitt (33) derart zusammenwirkt, dass der Innendurchgang (31) der Nadel (30) im Verjüngungsabschnitt (33) verjüngt wird.

12. Anlage nach einem der vorhergehenden Ansprüche 2 bis 11, **dadurch gekennzeichnet, dass** der Matrixmaterial-Zuführkanal (7) unter einem Winkel kleiner als 45°, vorzugsweise kleiner als 30°, in Bezug zu dem Fasermaterial (3) im Bereich der Mischkammereinmündung des Fasermaterial-Zuführkanal (5) in die Mischkammer (6) mündet.

13. Anlage nach einem der vorhergehenden Ansprüche 2 bis 12, **dadurch gekennzeichnet, dass** der Fasermaterial-Zuführkanal (5) zumindest abschnittsweise innerhalb des Matrixmaterial-Zuführkanals (7) liegt.

14. Anlage nach Anspruch 13, **dadurch gekennzeichnet, dass** in dem Matrixmaterial-Zuführkanal (7) eine Förderschnecke (40) zum Fördern des Matrixmaterials in Richtung Mischkammer (6) angeordnet ist, wobei der Fasermaterial-Zuführkanal (5) in der Drehachse der Förderschnecke (40) liegt.

15. Anlage nach Anspruch 14, **dadurch gekennzeichnet, dass** der Fasermaterial-Zuführkanal (5) oder eine Spitze (41) des Fasermaterial-Zuführkanals (5), in im Bereich der Mischkammereinmündung des Fasermaterial-Zuführkanals (5) liegt, feststehend gegenüber der drehbaren Förderschnecke (40) ausgebildet ist.

16. 3D-Druckkopf (1) zum Herstellen von dreidimensionalen Strukturen mit den Merkmalen nach einem der vorhergehenden Ansprüche.

## Claims

1. System for producing three-dimensional structures which have two or more different materials, having a three-dimensional printing head (1) which has a first material feed (2) for feeding a quasi-endless fibre material (3) to the three-dimensional printing head (1) and at least one second material feed (4) for feeding a matrix material to the three-dimensional printing head (1), which open in a common mixing chamber (6) of the three-dimensional printing head (1), wherein the three-dimensional printing head (1) is designed to control the temperature of the matrix material fed in, and the common mixing chamber (6) is designed to form a material mixture from the quasi-endless fibre material (3) fed in and the matrix material fed in, wherein the mixing chamber (6) communicates with an outlet of the three-dimensional printing head (1) which is set up to discharge the material mixture formed in order to produce the three-dimensional structure, wherein the first material feed (2) has a fibre material feed channel (5), which opens in the mixing chamber (6) axially relative to the outlet (8) in such a way that the quasi-endless fibre material (3) can be led from the fibre material feed channel (5) through the mixing chamber (6) to the outlet (8), **characterized in that** the fibre material feed channel (5) can be tapered in at least one section when the quasi-endless fibre material (3) is introduced into the fibre material feed channel (5).

2. System according to Claim 1, **characterized in that** the second material feed (4) has at least one matrix material feed channel (7), which opens in the mixing chamber (6) in such a way that a material stream of the matrix material fed in in the direction of the outlet (8) is brought about.

3. System according to Claim 1 or 2, **characterized in that** the fibre material feed channel (5) has a conveying device (10) with at least two opposite conveying elements, between which the fibre material (3) can be or is led through, wherein the at least one tapering section (9) can be formed between the two conveying elements.

4. System according to Claim 3, **characterized in that** the at least one conveying element of the conveying device (10) is formed such that it can be moved relative to the fibre material (3), the fibre material feed channel (5) and/or the respectively opposite other conveying element, in such a way that the width of the tapering section (9) between the two conveying elements is adjustable.

5. System according to Claim 3 or 4, **characterized in that** the conveying elements of the conveying device (10) are wider transversely with respect to the conveying direction than the quasi-endless fibre material (3), wherein the opposite conveying elements touch each other laterally beside the fibre material (3) passing through when the quasi-endless fibre material (3) is introduced into the fibre material feed channel (5).

6. System according to one of Claims 3 to 5, **characterized in that** one of the conveying devices (10) is a pair of rolls, which has two opposite rolls (11, 12) as conveying elements, between which the quasi-endless fibre material (3) can be led through, and/or **in that** one of the conveying devices (20) is a pair of conveyor belts, which has two opposite conveyor belts (21, 22) as conveying elements, between which the quasi-endless fibre material (3) can be led through.

7. System according to one of Claims 3 to 6, **characterized in that** at least one further second conveying device (20) is provided, which is arranged in the fibre material feed channel (5) downstream of the first conveying device (10) in the conveying direction, wherein one of the conveying elements of the first conveying device (10) deflects the quasi-endless fibre material (3) in the direction of the second conveying device (20).

8. System according to one of Claims 3 to 7, **characterized in that** at least one of the conveying elements of the conveying device (10) is rotatably driven.

9. System according to one of the preceding claims, **characterized in that** a needle (30) having an internal passage (31) is provided, into which the quasi-endless fibre material (3) can be introduced, wherein the needle (30) can be inserted with a form fit into the fibre material feed channel (5) when the fibre material (3) is introduced into the internal passage (31) of the needle (30), and wherein the needle (30) forms a tapering section (33), in which the internal passage (31) of the needle (30) can be tapered.

10. System according to Claim 9, **characterized in that** the needle (30) has a flexible or deformable material, at least in the tapering section (33), which tapers the internal passage (31) as a result of a force in the direction of the latter.

11. System according to Claim 10, **characterized in that** in the region in which the tapering section (33) of the needle (30) is provided when inserted, the fibre material feed channel (5) has at least one projection, which interacts with the needle (30) in the tapering section (33) in such a way that the internal passage (31) of the needle (30) is tapered in the tapering section (33).

12. System according to one of the preceding Claims 2 to 11, **characterized in that** the matrix material feed channel (7) opens into the mixing chamber (6) at an angle of less than 45°, preferably less than 30°, in relation to the fibre material (3) in the region of the mixing chamber entrance of the fibre material feed channel (5).

13. System according to one of the preceding Claims 2 to 12, **characterized in that** the fibre material feed channel (5) is at least partly located within the matrix material feed channel (7).

14. System according to Claim 13, **characterized in that** a screw conveyor (40) for conveying the matrix material in the direction of the mixing chamber (6) is arranged in the matrix material feed channel (7), wherein the fibre material feed channel (5) is located in the axis of rotation of the screw conveyor (40).

15. System according to Claim 14, **characterized in that** the fibre material feed channel (5) or a tip (41) of the fibre material feed channel (5) is located in the region of the mixing chamber entrance of the fibre material feed channel (5), and is designed to be stationary relative to the rotatable screw conveyor (40) .

16. Three-dimensional printing head (1) for producing three-dimensional structures, having the features according to one of the preceding claims.

## Revendications

1. Installation pour produire des structures tridimensionnelles comprenant deux matériaux différents ou plus, comportant une tête d'impression 3D (1) ayant une première alimentation en matériau (2) pour alimenter un matériau fibreux quasiment sans fin (3) à la tête d'impression 3D (1) et au moins une seconde alimentation en matériau (4) pour alimenter un matériau de matrice à la tête d'impression 3D (1), qui débouchent dans une chambre de mélange commune (6) de la tête d'impression 3D (1),
dans laquelle
la tête d'impression 3D (1) est réalisée pour tempérer le matériau de matrice alimenté, et la chambre de mélange commune (6) est réalisée pour former un mélange de matériaux à partir du matériau fibreux quasiment sans fin (3) alimenté et du matériau de matrice alimenté,
la chambre de mélange (6) communique avec une sortie de la tête d'impression 3D (1), ladite sortie étant conçue pour distribuer le mélange de matériaux formé afin de produire la structure tridimensionnelle,
la première alimentation en matériaux (2) présente un canal d'alimentation en matériaux fibreux (5) qui débouche dans la chambre de mélange (6) axialement par rapport à la sortie (8) de telle sorte que le matériau fibreux quasiment sans fin (3) peut être amené depuis le canal d'alimentation en matériau fibreux (5) jusqu'à la sortie (8) en passant par la chambre de mélange (6),
**caractérisée en ce que**
le canal d'alimentation en matériau fibreux (5) peut être rétréci sur au moins une portion lorsque le matériau fibreux quasiment sans fin (3) est introduit dans le canal d'alimentation en matériau fibreux (5).

2. Installation selon la revendication 1,
**caractérisée en ce que**
la seconde alimentation en matériau (4) présente au moins un canal d'alimentation en matériau de matrice (7) qui débouche dans la chambre de mélange (6) de manière à provoquer un flux du matériau de matrice alimenté dirigé en direction de la sortie (8).

3. Installation selon la revendication 1 ou 2,
**caractérisée en ce que** le canal d'alimentation en matériau fibreux (5) présente un dispositif de transport (10) ayant au moins deux éléments de transport opposés entre lesquels le matériau fibreux (3) est ou peut être acheminé, ladite au moins une portion de rétrécissement (9) pouvant être réalisée entre les deux éléments de transport.

4. Installation selon la revendication 3,
**caractérisée en ce qu'**au moins un élément de transport du dispositif de transport (10) est réalisé de manière à être déplaçable par rapport au matériau fibreux (3), au canal d'alimentation en matériau fibreux (5) et/ou à l'autre élément de transport respectif opposé, de telle sorte que la largeur de la portion de rétrécissement (9) entre les deux éléments de transport est réglable.

5. Installation selon la revendication 3 ou 4,
**caractérisée en ce que** les éléments de transport du dispositif de transport (10) transversalement à la direction de transport sont plus larges que le matériau fibreux quasiment sans fin (3), les éléments de transport opposés se touchant latéralement à côté du matériau fibreux (3) qui passe, lorsque le matériau fibreux quasiment sans fin (3) est introduit dans le canal d'alimentation en matériau fibreux (5).

6. Installation selon l'une des revendications 3 à 5,
**caractérisée en ce que** l'un des dispositifs de transport (10) est une paire de rouleaux ayant comme éléments de transport deux rouleaux opposés (11, 12) entre lesquels peut passer le matériau fibreux quasiment sans fin (3), et/ou **en ce que**
l'un des dispositifs de transport (20) est une paire de bandes transporteuses ayant comme éléments de transport deux bandes transporteuses opposées (21, 22) entre lesquelles peut passer le matériau fibreux quasiment sans fin (3).

7. Installation selon l'une des revendications 3 à 6,
**caractérisée en ce qu'**il est prévu au moins un second dispositif de transport (20) supplémentaire, qui est disposé dans le canal d'alimentation en matériau fibreux (5) en aval du premier dispositif de transport (10) dans la direction de transport, l'un des éléments de transport du premier dispositif de transport (10) renvoyant le matériau fibreux quasiment sans fin (3) vers le second dispositif de transport (20).

8. Installation selon l'une des revendications 3 à 7,
**caractérisée en ce que** l'un au moins des éléments de transport du dispositif de transport (10) est entraîné en rotation.

9. Installation selon l'une des revendications précédentes,
**caractérisée en ce qu'**il est prévu une aiguille (30) munie d'un passage intérieur (31) dans lequel le matériau fibreux quasiment sans fin (3) peut être introduit, l'aiguille (30) pouvant être introduite par coopération de forme dans le canal d'alimentation en matériau fibreux (5), lorsque le matériau fibreux (3) est introduit dans le passage intérieur (31) de l'aiguille (30), et l'aiguille (30) formant une portion de rétrécissement (33) au niveau de laquelle le passage intérieur (31) de l'aiguille (30) peut être rétréci.

10. Installation selon la revendication 9,
**caractérisée en ce que** l'aiguille (30) présente, au moins dans la portion de rétrécissement (33), un matériau flexible ou déformable qui rétrécit le passage intérieur (31) par une force en direction de ce dernier.

11. Installation selon la revendication 10,
**caractérisée en ce que** dans la zone dans laquelle la portion de rétrécissement (33) de l'aiguille (30) est prévue à l'état introduit, le canal d'alimentation en matériau fibreux (5) présente au moins une saillie qui coopère avec l'aiguille (30) dans la portion de rétrécissement (33) de telle sorte que le passage intérieur (31) de l'aiguille (30) est rétréci dans la portion de rétrécissement (33).

12. Installation selon l'une des revendications précédentes 2 à 11,
**caractérisée en ce que** le canal d'alimentation en matériau de matrice (7) débouche dans la chambre de mélange (6) sous un angle inférieur à 45°, de préférence inférieur à 30°, par rapport au matériau fibreux (3) dans la zone de l'embouchure de la chambre de mélange du canal d'alimentation en matériau fibreux (5).

13. Installation selon l'une des revendications précédentes 2 à 12,
**caractérisée en ce que** le canal d'alimentation en matériau fibreux (5) se trouve au moins localement à l'intérieur du canal d'alimentation en matériau de matrice (7).

14. Installation selon la revendication 13,
**caractérisée en ce qu'**une vis transporteuse (40) pour le transport du matériau de matrice en direction de la chambre de mélange (6) est disposée dans le canal d'alimentation en matériau de matrice (7), le canal d'alimentation en matériau fibreux (5) se trouvant dans l'axe de rotation de la vis transporteuse (40).

15. Installation selon la revendication 14,
**caractérisée en ce que** le canal d'alimentation en matériau fibreux (5) ou une pointe (41) du canal d'alimentation en matériau fibreux (5), qui se trouve dans la zone de l'embouchure de la chambre de mélange du canal d'alimentation en matériau fibreux (5), est réalisé(e) de façon stationnaire par rapport à la vis transporteuse rotative (40).

16. Tête d'impression 3D (1) pour produire des structures tridimensionnelles ayant les caractéristiques selon l'une des revendications précédentes.
